# EUROPEAN PATENT APPLICATION

(11) **EP 0 726 110 A1**
(43) Date of publication of application: **14.08.1996**
(21) Application number: 96101204.4
(22) Date of filing: 29.01.1996
(51) Int. Cl.: B21K 1/20, B21K 1/02, B21K 21/00

(54) **Method for hot-pressing balls, particularly for ball valves and the like, and ball produced thereby**

(30) Priority: 10.02.1995 IT MI950254
(71) Applicant: Vinci, Rosa, 25065 Lumezzane S.S. (Brescia) (IT)
(72) Inventor: Seneci, Oscar, I-25065 Lumezzane S.S. (Brescia) (IT)
(74) Representative: Modiano, Guido, Dr.-Ing.

(57) **Abstract**

A method for hot-pressing balls, particularly for ball valves and the like, which consists in: hot-pressing a segment of a bar (1) to obtain an intermediate component (10) that has a central disk (11), from the faces of which an inner cylindrical element (12) and an outer cylindrical element (13) protrude in a mutually coaxial fashion; performing, on the intermediate component (10), a hot-drawing operation to give the outer cylindrical element (13) a substantially spherical shape, joining the axial ends of the cylindrical elements (12,13); and carrying out chip-forming machining operations to obtain a through diametrical channel (20) and the finish of the outer surface.

## Description

The present invention relates to a method for hot-pressing balls, particularly for ball valves and the like, and to the ball obtained thereby.

It is known that in ball valves and the like, the shutter is constituted by a ball provided with a diametrical passage channel and is rotated, by the actuation lever or knob, about an axis that lies at right angles to the main axis of the diametrical channel, so as to pass from the open position to the closed position and vice versa with a 90^{°} rotation.

The balls that are traditionally used are obtained from a solid body, usually made of brass, on which the diametrical channel and a milling in an equatorial region, for engagement with the ball actuation stem, are obtained by machining.

This solution, especially in the case of large ball valves, entails the use of a large amount of material and, most of all, considerable weight.

In order to try to overcome this drawback, balls for ball valves have already been obtained with a new formation technology that in practice uses two tube segments, usually made of brass, that are arranged coaxially to each other inside a drawing die that deforms, by drawing, the outer tubular portion until it assumes a substantially spherical surface and the axial ends of the outer tubular portion are joined to the axial ends of the inner tubular portion.

Once this shaping has been performed, the spherical body thus obtained is machined on its surface to finish both the outer surface and the inner surface, and a milling is also produced on the outer part to engage the end of the actuation stem.

This milling in practice forms an opening that is a source of considerable problems for the ball valve, since it forms a region of connection to the outside which can cause external leaks if openings form, for example in the region that connects the outer tubular portion and the inner tubular portion.

Furthermore, the slot that is formed is necessarily delimited by thinner material, and therefore plays often form, after a certain period of use of the valve, due to the torsional stress transmitted by the stem to the spherical body, compromising the correct operation of the valve.

Another drawback of the above-described balls consists in that the machining method used, i.e., the coupling of two tubular brass segments, is considerably complicated and expensive since it requires several operations.

The aim of the invention is to eliminate the drawbacks described above by providing a method for the hot-pressing of balls, particularly for ball valves, that allows to produce balls that are internally provided with cavities but do not require the use of two mutually joined tubular portions.

Within the scope of this aim, a particular object of the invention is to provide a method that allows to drastically simplify all the production steps, thus obtaining a product in which the portions that constitute the inner surface, where the passage channel is formed, and the portions that form the outer surface are always stably joined to each other even before the ball formation stage.

Another object of the present invention is to provide a method which, by virtue of its characteristics, is capable of giving the greatest assurances of reliability and safety in use.

Another object of the present invention is to provide a method for the hot-pressing of balls, particularly for ball valves and the like, that allows to achieve a product that is competitive from a merely economic point of view.

This aim, these objects, and others which will become apparent hereinafter are achieved by a method for the hot-pressing of balls, particularly for ball valves and the like, according to the invention, characterized in that it comprises: hot-pressing a segment of a bar to obtain an intermediate component that has a central disk, from both faces of which an inner cylindrical element and an outer cylindrical element protrude in a mutually coaxial fashion; performing, on said intermediate component, a hot-drawing operation to give said outer cylindrical element a substantially spherical shape, joining the axial ends of said cylindrical elements; and carrying out chip-forming machining operations to obtain a through diametrical channel and the finish of the outer surface.

Further characteristics and advantages will become apparent from the description of a preferred but not exclusive embodiment of a method for the hot-pressing of balls, particularly for ball valves and the like, and of the ball obtained thereby, which is illustrated only by way of non-limitative example in the accompanying drawings, wherein:
figure 1 is a schematic view of the segment of the bar or billet used to form the ball;
figure 2 is an axial sectional view of the intermediate component;
figure 3 is a sectional view of the intermediate component after hot-drawing to obtain the substantially spherical shape;
figure 4 is a schematic perspective view of the intermediate component, after it has been given a spherical shape;
figure 5 is a sectional view of the ball after machining;
figure 6 is a perspective view of the ball;
figure 7 is a schematic sectional view, in open position, of the die used for hot-pressing the bar segment;
figure 8 is a view of the die during the initial closure stage;
figure 9 is a view of the die in the fully closed position for the formation of the intermediate component;
figure 10 is a schematic view of the stage for the extraction of the intermediate component.

With reference to the above figures, the method for hot-pressing balls, particularly ball valves and the like, according to the invention, consists in providing a segment of a bar or billet, generally designated by the reference numeral 1, and in performing thereon a hot-pressing operation at a temperature of approximately 620^{o}, as will become apparent hereinafter, to provide an intermediate component 10 that has a central disk-like portion 11 that has, on both of its faces, an inner cylindrical element 12 and an outer cylindrical element 13 that are coaxial to each other.

Furthermore, in a portion of the flange 14 of the central disk 12 that rigidly mutually joins the inner cylindrical element and the outer cylindrical element, there is an enlarged portion 15 extending, on a portion of the outer surface of the outer cylindrical element, with a protruding portion 16 that acts as reference to identify, on the outside, the region where the enlarged portion 15 is formed.

A subsequent hot-drawing stage, at a temperature of approximately 400°, is performed after the hot-pressing stage; this drawing stage shapes, by deformation, the outer cylindrical element 13, which assumes a substantially cylindrical shape, joining its axial ends to the axial ends of the inner cylindrical element 12.

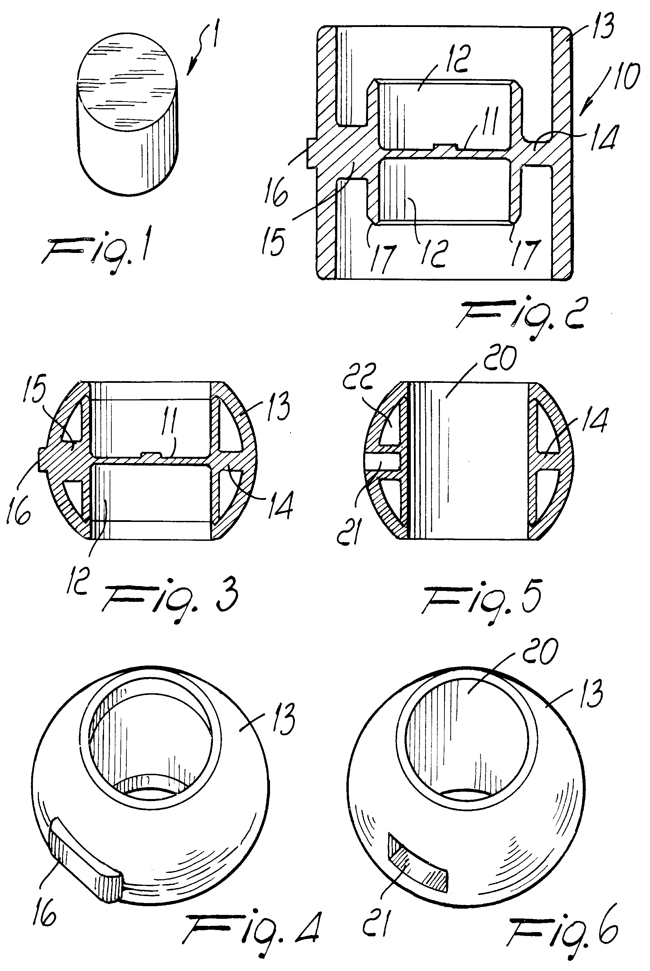

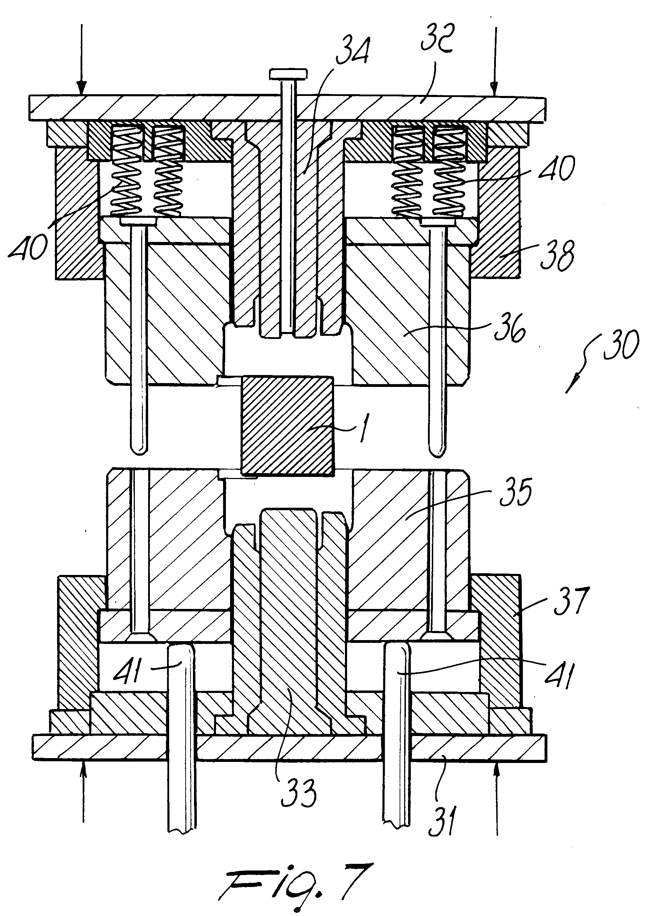

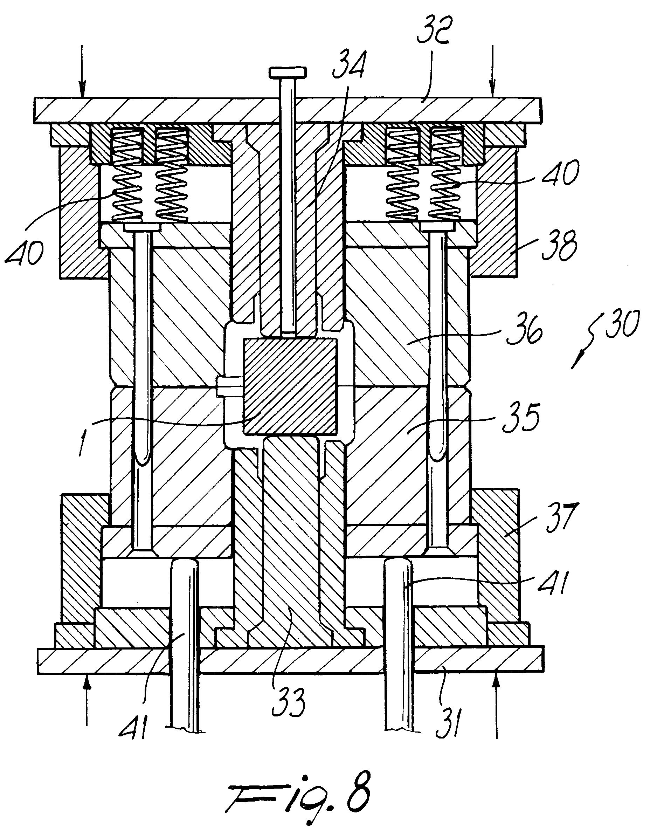

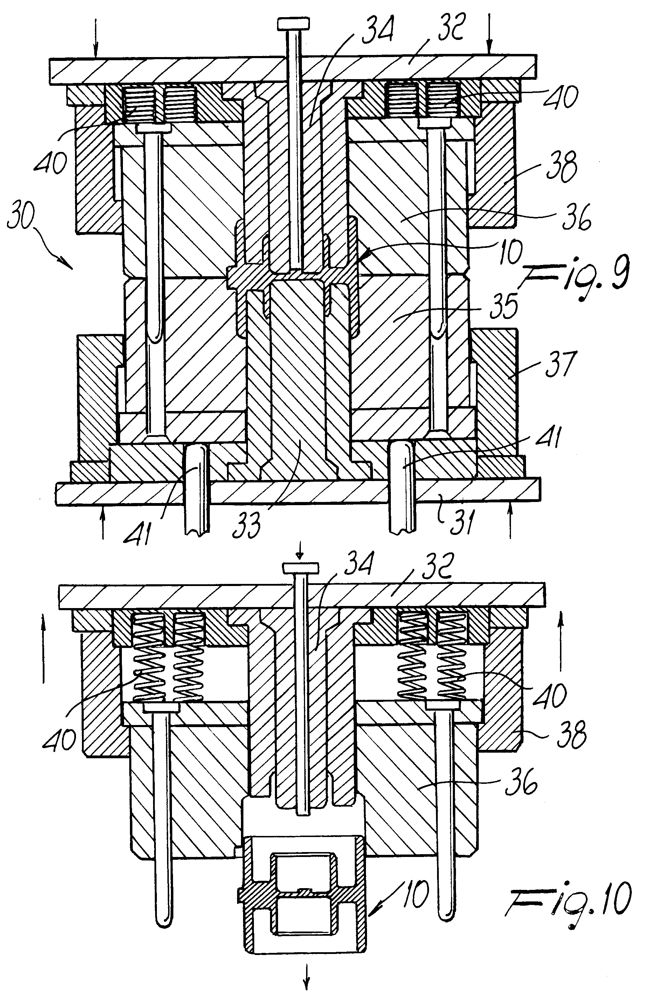

In order to facilitate joining at the axial ends, the inner cylindrical element advantageously has, at its axial ends, a double-angle chamfer 17 which, as more clearly shown in the sectional view of figure 3, in practice wedges into the axial end of the outer cylindrical element 13 after the drawing operation.

Once the intermediate element has been shaped by drawing, finishing to obtain the ball is performed by means of chip-forming machining operations that allow to remove the central disk 11 inside the cylindrical element 12, thus forming the diametrical passage channel 20 of the ball.

A recess 21 is also formed at the enlarged portion 15, which is identified on the outside by the protruding portion 16; said recess is not connected to the interspace 22, which is enclosed between the inner cylindrical element and the outer cylindrical element that are mutually joined by drawing; said interspace 22 forms the region for engagement with the ball actuation stem.

Since the recess 21 is delimited by the material along its entire surface, it prevents deformations during ball actuation, thus eliminating the corresponding plays.

A die, generally designated by the reference numeral 30 and described in figures 7 to 10, is used to obtain the intermediate component.

More specifically, the die 30 has a lower plate 31 and an upper plate 32 that can move toward each other and support a lower punch 33 and an upper punch 34, which are accommodated inside a lower die part 35 and an upper die part 36 that are retained by die supporting rings 37 and 38 and are in contrast with elastic means that are constituted by upper pusher springs 40 and by pneumatic pistons or the like 41 that are arranged downward.

The die parts 35 and 36, as shown in figure 8, delimit, together with the punches 33 and 34, the region for accommodating the billet 1 and can be mutually coupled when the plates 31 and 32 move mutually closer.

As approach continues, the die parts, which have made mutual contact, cause the sliding of the die parts with respect to the corresponding supporting plates, with consequent hot deformation of the billet which, due to a plunger effect, distributes inside the die formed by the punches and by the die parts, thus assuming the shape of the component 1 described above.

From the above description it is evident that the invention achieves the intended aim and objects, and in particular the fact is stressed that a ball for ball valves is obtained by providing an intermediate component that is constituted by a monolithic body that combines the inner cylindrical element and the outer cylindrical element, accordingly simplifying all the steps for mutual positioning and execution.

Furthermore, another very important aspect is constituted by the fact that the inner cylindrical element, which forms the through channel, and the outer cylindrical element, which in practice will form the outer surface of the ball, are always stably connected to each other and therefore all the problems related to mutual positioning during the drawing stage that produces the spherical shape of the part are eliminated.

Another extremely important aspect is constituted by the fact that by carrying out this type of method it is possible to provide, inside the region delimited between the inner cylindrical element and the outer cylindrical element, an enlarged portion that allows to obtain the recess for engagement with the end of the actuation stem without, however, connecting to the outside the cavity that is delimited between the inner cylindrical element and the outer cylindrical element.

Furthermore, the presence of a recess instead of a slot as in balls obtained with two portions of tubular elements, allows to have a region for coupling to the stem that is not deformable and is thus such as to avoid creating plays after a certain period of use.

The invention thus conceived is susceptible of numerous modifications and variations, all of which are within the scope of the inventive concept.

All the details may furthermore be replaced with other technically equivalent elements.

In practice, although the best results have been obtained by using brass, the materials employed, as well as the contingent shapes and dimensions, may be any according to the requirements.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A method for hot-pressing balls, particularly for ball valves and the like, characterized in that it comprises: hot-pressing a segment of a bar to obtain an intermediate component that has a central disk, from both faces of which an inner cylindrical element and an outer cylindrical element protrude in a mutually coaxial fashion; performing, on said intermediate component, a hot-drawing operation to give said outer cylindrical element a substantially spherical shape, joining the axial ends of said cylindrical elements; and carrying out chip-forming machining operations to obtain a through diametrical channel and the finish of the outer surface.

2. A method according to claim 1, characterized in that the hot-pressing of the bar segment is performed at a temperature of approximately 620^{o}.

3. A method according to the preceding claims, characterized in that the drawing of said intermediate component is performed at approximately 400^{o}C.

4. A method according to one or more of the preceding claims, characterized in that said intermediate component has, on the disk-like portion that joins said inner cylindrical element and said outer cylindrical element, an enlarged portion at which a protruding part is externally provided on said outer cylindrical element.

5. A method according to one or more of the preceding claims, characterized in that the axial end of said inner cylindrical element has a double-angle chamfer.

6. A method according to one or more of the preceding claims, characterized in that a recess is formed for engagement with the actuation stem of the valve, said recess being closed hermetically with respect to the inside of the substantially spherical body and being formed at said protruding outer part of said enlarged portion.

7. An intermediate component for providing a ball for ball valves, characterized in that it comprises a central disk, from both faces of which an inner cylindrical element and an outer cylindrical element protrude monolithically with said central disk, said cylindrical elements being mutually coaxial, an enlarged portion being provided in the central disk portion that is located in the region that lies between said inner cylindrical element and said outer cylindrical element, a protruding part provided on the outside of said outer cylindrical element being arranged at said enlarged portion.

8. A ball for ball valve, characterized in that it comprises an inner cylindrical element rigidly and monolithically joined, by means of an annular flange, to an outer cylindrical portion that is subsequently shaped so as to assume a substantially spheroidal shape, an enlarged portion being provided in said annular portion, the recess for engagement with the actuation stem being formed in said enlarged portion.

9. A die for producing an intermediate component for obtaining balls for ball valves, characterized in that it comprises a lower plate and an upper plate that can move with respect to each other and rigidly support a lower punch and an upper punch oppositely arranged to each other, said punches being arranged inside die parts that can slide with respect to the corresponding supporting plates by virtue of the interposition of elastic means.
